# EUROPÄISCHE PATENTSCHRIFT

(11) **EP 3 185 990 B1**
(45) Veröffentlichungstag und Bekanntmachung des Hinweises auf die Patenterteilung: **17.10.2018**
(21) Anmeldenummer: 15756136.6
(22) Anmeldetag: 20.08.2015
(51) Int. Cl.: B01D 53/14

(54) **ENTFERNUNG VON KOHLENDIOXID AUS EINEM FLUIDSTROM MIT EINEM TERT-BUTYLAMIN UND EINEM AKTIVATOR**
REMOVAL OF CARBON DIOXIDE FROM A FLUID FLOW, USING A TERT BUTYLAMINE AND AN ACTIVATOR
EXTRACTION DU DIOXYDE DE CARBONE D'UN FLUX DE FLUIDE COMPRENANT UNE TERT-BUTYLAMINE ET UN ACTIVATEUR

(30) Priorität: 25.08.2014 EP 14182105
(43) Veröffentlichungstag der Anmeldung: 05.07.2017
(73) Patentinhaber: BASF SE, 67056 Ludwigshafen am Rhein (DE)
(72) Erfinder: INGRAM, Thomas, 68163 Mannheim (DE); NOTZ, Ralf, 67069 Ludwigshafen (DE); VORBERG, Gerald, 67346 Speyer (DE); SIEDER, Georg, 67098 Bad Dürkheim (DE); LOZANO MARTINEZ, Gustavo Adolfo, 67063 Ludwigshafen (DE); GARCIA ANDARCIA, Hugo Rafael, Shanghai 200031 (CN)
(74) Vertreter: BASF IP Association
(86) Internationale Anmeldenummer: PCT/EP2015/069160
(87) Internationale Veröffentlichungsnummer: WO 2016/030276

(56) Entgegenhaltungen:
- WO-A2-2007/134994
- US-A- 4 471 138
- US-A1- 2010 288 125
- US-A1- 2013 243 676

## Beschreibung

Die vorliegende Erfindung betrifft ein Absorptionsmittel und Verfahren zur Entfernung von Kohlendioxid aus einem Fluidstrom.

Die Entfernung von Sauergasen, wie z. B. CO₂, H₂S, SO₂, CS₂, HCN, COS oder Merkaptanen, aus Fluidströmen wie Erdgas, Raffineriegas oder Synthesegas, ist aus unterschiedlichen Gründen von Bedeutung. CO₂ kann in Verbindung mit Wasser, welches in den Fluidströmen häufig mitgeführt wird, Säuren bilden, welche zur Korrosion an Leitungen und Armaturen führen. Unter anderem aus Erdgas muss Kohlendioxid so weit entfernt werden, dass der Brennwert des Gases nicht unter den gewünschten Wert fällt. Für die Weiterverarbeitung in einer Erdgasverflüssigungsanlage (LNG = liquefied natural gas) muss CO₂ hingegen vollständig entfernt werden.

Zur Entfernung von Sauergasen werden Wäschen mit wässrigen Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf abgestrippt werden. Nach dem Regenerationsprozess kann das Absorptionsmittel wiederverwendet werden.

Hohe CO₂-Absorptionsgeschwindigkeiten und/oder eine wirksame CO₂-Entfernung selbst bei niedrigen CO₂-Partialdrücken gelingen durch die Verwendung von Absorptionsmitteln mit einer hohen CO₂-Affinität, wie primären und sekundären Alkanolaminen. Die hohe CO₂-Affinität bedingt, dass die CO₂-Absorption stark exotherm verläuft. Derartige Absorptionsmittel erfordern allerdings aufgrund des hohen Betrags der Absorptionsreaktionsenthalpie in der Regel auch einen höheren Energieverbrauch bei der Regeneration.

Im Gegensatz zu primären und sekundären Alkanolaminen reagieren tertiäre Alkanolamine, wie z. B. Methyldiethanolamin (MDEA), nicht direkt mit Kohlendioxid, da das Amin voll substituiert ist. Vielmehr wird Kohlendioxid mit dem tertiären Alkanolamin und mit Wasser zu Hydrogencarbonat in einer Reaktion mit geringer Reaktionsrate umgesetzt. Zur Umsetzung eines CO₂-Moleküls wird ein Amin-Molekül benötigt. Da keine direkte Bindung zwischen tertiären Alkanolaminen und Kohlendioxid entsteht, kann die Aminlösung sehr wirtschaftlich regeneriert werden. In vielen Fällen reicht dabei eine Flash-Regenerierung mit einer oder mehreren Entspannungsstufen aus. Eine optionale zusätzliche thermische Regenerierung erfordert wesentlich weniger Energie als im Falle von Lösungen aus primären oder sekundären Alkanolaminen.

Sterisch ungehinderte primäre oder sekundäre Amine, beispielsweise Piperazin, können als Promotoren die CO₂-Absorption von tertiären Aminen durch intermediäre Bildung einer Carbamatstruktur beschleunigen. Bei dieser direkten Reaktion des Amins mit Kohlendioxid ist die Absorptionsgeschwindigkeit hoch, dafür kann jedoch nur ein CO₂-Molekül von zwei Amin-Molekülen aufgenommen werden. So offenbart die US 4,336,233 ein Verfahren zur Entfernung von CO₂ und/oder H₂S aus Gasen mittels eines wässrigen Absorptionsmittels, welches MDEA und Piperazin enthält. Die Verwendung von Piperazin als CO₂-Promotor ermöglicht eine um ein vielfaches höhere CO₂-Absorptionsgeschwindigkeit gegenüber Systemen ohne Promotor.

Die EP 0 558 019 offenbart ein Verfahren zur Entfernung von Kohlendioxid aus Verbrennungsabgasen. Es wird ein Absorptionsmittel verwendet, welches 100 Gewichtsteile einer ersten Verbindung, ausgewählt unter 2-Amino-2-methyl-1,3-propandiol, 2-Amino-2-methyl-1-propanol, 2-Amino-2-ethyl-1,3-propandiol, t-Butyldiethanolamin und 2-Amino-2-hydroxymethyl-1,3-propandiol, mit 1-25 Gewichtsteilen einer zweiten Verbindung, ausgewählt unter Piperazin, Piperidin, Morpholin, Glycin, 2-Methylaminoethanol, 2-Piperidinethanol und 2-Ethylaminoethanol, kombiniert. Die Verwendung der zweiten Verbindung ermöglicht eine höhe CO₂-Absorptionsgeschwindigkeit gegenüber Systemen ohne eine solche zweite Verbindung.

In der US 6,036,931 wird ein Verfahren beschrieben, um Kohlendioxid mittels einer wässrigen Absorptionslösung aus Abgasen zu entfernen. Das Absorptionsmittel enthält 100 Teile eines Amins mit einer Hydroxygruppe und einer primären Aminogruppe, wobei die primäre Aminogruppe an ein tertiäres Kohlenstoffatom mit zwei unsubstituierten Alkylgruppen gebunden ist; und 1 bis 25 Teile eines Amins, ausgewählt unter Piperidin, Morpholin, Glycin und einem Alkanolamin mit einer sekundären Aminogruppe, wobei die sekundäre Aminogruppe eine unsubstituierte Alkylgruppe mit 1 bis 3 Kohlenstoffatomen trägt und das Stickstoffatom mit einer Gruppe verbunden ist, die eine Kette von 2 oder mehr Kohlenstoffatomen enthält.

Die US 4,101,633 offenbart ebenfalls ein Verfahren zur Entfernung von Kohlendioxid aus Gasgemischen. Es wird ein Absorptionsmittel verwendet, welches mindestens 50% eines sterisch gehinderten Alkanolamins, wie 2-(2-Amino-2-methylpropoxy)-ethanol, und mindestens 10% eines tertiären Aminoalkohols umfasst.

Die WO 2006/089423 A1 offenbart Absorptionsmittel, umfassend ein Amin ausgewählt unter tertiären Aminen, sekundären Alkanolaminen, 2-(2-Aminoethylamino)ethanol, 2-Amino-2-methyl-1-propanol, Alkylenaminen, Alkylethern von Alkylenglycolen, Dimethylether von Polyethylenglycol, Tetraethylenglycoldimethylether, Aminoethern, 2-substituierte Piperidinalkohole, Piperazin, Piperazinderivaten, Carboxylaten und Kombinationen davon, und Carboanhydrasen. Es wurde gezeigt, dass der Zusatz von Carboanyhdrasen zu einer verbesserten CO₂-Absorption führt.

Die US 8,192,531 B2 offenbart Absorptionsmittel, umfassend eine Verbindung asugewählt unter Aminen, Alkanolaminen, Dialkyethern von Polyalkylenglycolen und Gemischen davon, und Carboanhydrase als Aktivator. Auch hier wurde gezeigt, dass der Zusatz von Carboanhydrasen zu einer verbesserten CO₂-Absorption führt.

In der US 4,471,138 wurde gezeigt, dass stark sterisch gehinderte sekundäre Amine, wie 2-(2-tert-Butylaminoethoxy)ethanol (TBAEE), auch in Kombination mit weiteren Aminen wie Methyldiethanolamin (MDEA), eine deutlich höhere H₂S-Selektivität als MDEA aufweisen. Als stark sterisch gehindert werden Amine bezeichnet, deren Stickstoffatom an eine oder mehrere umfangreiche Gruppen gebunden ist und welche einen kumulativen sterischen Parameter (Taft-Konstante) *E*ₛ von mehr als 1,75 aufweisen.

Die US 2010/0288125 A1 offenbart ebenfalls ein Absorptionsmittel zur Abtrennung von Sauergasen, welches ein Amin, eine Säure und gegebenenfalls einen Aktivator enthält.

Der Erfindung liegt die Aufgabe zugrunde, ein Absorptionsmittel und ein Verfahren anzugeben, welches eine schnelle Absorption von Kohlendioxid aus Fluidströmen erlaubt, wobei die erforderliche Regenerationsenergie gegenüber Absorptionsmitteln auf der Basis tertiärer Amine nicht wesentlich erhöht ist. Eine höhere CO₂-Absorptionsgeschwindigkeit führt zu einer kürzeren Kontaktzeit zwischen Absorptionsmittel und Fluidstrom. Dies bewirkt unter anderem, dass der Absorber kürzer ausgelegt werden kann bzw. geringere Absorptionsmittel-Umlaufraten gewählt werden können.

Es wurde nun überraschend gefunden, dass die CO₂-Absorptionsgeschwindigkeit einer wässrigen Lösung eines Amins der Formel (I) und eines Aktivators deutlich höher ist, als die eines tertiären Amins und eines Aktivators.

Die Aufgabe wird gelöst durch ein Absorptionsmittel zur Entfernung von Kohlendioxid aus einem Fluidstrom, umfassend eine wässrige Lösung, welche umfasst:
a) ein Amin der allgemeinen Formel (I) 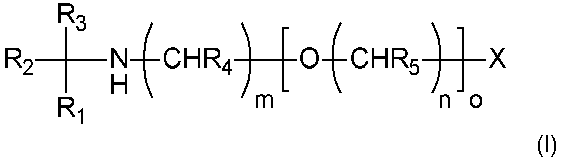 worin R₁, R₂ und R₃ unabhängig voneinander ausgewählt sind unter C₁₋₄-Alkyl und C₁₋₄-Hydroxyalkyl; R₄ jeweils unabhängig ausgewählt ist unter Wasserstoff, C₁₋₄-Alkyl und C₁₋₄-Hydroxyalkyl; R₅ jeweils unabhängig ausgewählt ist unter Wasserstoff, C₁₋₄-Alkyl und C₁₋₄-Hydroxyalkyl; X für OH oder NH(CR₁R₂R₃) steht; m für 2, 3, 4 oder 5 steht; n für 2, 3, 4 oder 5 steht; und o für 0 oder 1 steht;
   und
b) wenigstens einen Aktivator, ausgewählt unter
   b1) einem sterisch ungehinderten primären Amin und/oder einem sterisch ungehinderten sekundären Amin; und
   b2) einer Carboanyhdrase.

Die Erfindung betrifft außerdem ein Verfahren zur Entfernung von Kohlendioxid aus einem Fluidstrom, bei dem man den Fluidstrom mit dem erfindungsgemäßen Absorptionsmittel in Kontakt bringt.

Das Absorptionsmittel umfasst eine wässrige Lösung eines Alkanolamins der allgemeinen Formel (I), 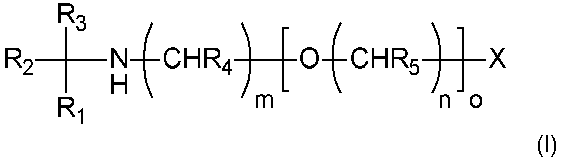 worin R₁, R₂ und R₃ unabhängig voneinander ausgewählt sind unter C₁₋₄-Alkyl und C₁₋₄-Hydroxyalkyl; R₄ jeweils unabhängig ausgewählt ist unter Wasserstoff, C₁₋₄-Alkyl und C₁₋₄-Hydroxyalkyl; R₅ jeweils unabhängig ausgewählt ist unter Wasserstoff, C₁₋₄-Alkyl und C₁₋₄-Hydroxyalkyl; X für OH oder NH(CR₁R₂R₃) steht; m für 2, 3, 4 oder 5 steht; n für 2, 3, 4 oder 5 steht; und o für 0 oder 1 steht. R₄ ist in jeder Wiederholungseinheit unabhängig ausgewählt unter Wasserstoff, C₁₋₄-Alkyl und C₁₋₄-Hydroxyalkyl. R₅ ist in jeder Wiederholungseinheit unabhängig ausgewählt unter Wasserstoff, C₁₋₄-Alkyl und C₁₋₄-Hydroxyalkyl. Vorzugsweise stehen R₁, R₂ und R₃ jeweils für Methyl. R₄ steht vorzugsweise für Wasserstoff oder Methyl, insbesondere für Wasserstoff. R₅ steht vorzugsweise für Wasserstoff oder Methyl, insbesondere für Wasserstoff. Vorzugsweise steht m für 2, 3 oder 4, insbesondere 2 oder 3, ganz besonders bevorzugt für 2. Vorzugsweise steht n für 2, 3 oder 4, insbesondere 2 oder 3, ganz besonders bevorzugt für 2. Vorzugsweise steht o für 1.

Geeignete Amine der Formel (I) sind 2-(2-tert-Butylaminoethoxy)ethanol (TBAEE), 3-(tert-Butylamino)propanol, 4-(tert-Butylamino)butanol, 2-(2-tert-Amylaminoethoxy)-ethanol, 2-(2-(1-Methyl-1-ethylpropylamino)ethoxy)ethanol, 2-(tert-Butylamino)ethanol, (2-(tert-Butylamino)ethyl)methylamin und Gemische davon. In einer bevorzugten Ausführungsform ist das Amin a) 2-(2-tert-Butylaminoethoxy)ethanol (auch als tert-Butylaminodiglycol (TBADG) bezeichnet).

Das erfindungsgemäße Absorptionsmittel enthält als Komponente b) einen Aktivator, der ausgewählt ist unter b1) einem sterisch ungehinderten primären Amin und/oder einem sterisch ungehinderten sekundären Amin; und b2) einer Carboanyhdrase.

Das sterisch ungehinderte primäre oder sekundäre Amin b1) enthält in seinem Molekül wenigstens eine sterisch ungehinderte primäre oder sekundäre Aminogruppe, d. h. ein Amin-Stickstoffatom, an das nur Wasserstoffatome und primäre Kohlenstoffatome gebunden sind.

Das sterisch ungehinderte primäre oder sekundäre Amin b1) verfügt vorzugsweise nicht über saure Gruppen, wie insbesondere Phosphonsäure-, Sulfonsäure- und/oder Carbonsäuregruppen.

Das sterisch ungehinderte primäre oder sekundäre Amin b1) ist beispielsweise ausgewählt unter

Alkanolaminen, wie Monoethanolamin (MEA), Diethanolamin, (DEA), Ethylaminoethanol, 1-Amino-2-methyl-propan-2-ol, 2-Amino-1-butanol, 2-(2-Aminoethoxy)ethanol und 2-(2-Aminoethoxy)ethanamin,
Polyaminen, wie Hexamethylendiamin, 1,4-Diaminobutan, 1,3-Diaminopropan, 3-(Methylamino)propylamin (MAPA), N-(2-Hydroxyethyl)ethylendiamin, 3-(Dimethylamino)propylamin (DMAPA), 3-(Diethylamino)propylamin, N,N'-Bis(2-hydroxyethyl)ethylendiamin,
5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können, wie Piperazin, 2-Methylpiperazin, N-Methylpiperazin, N-Ethylpiperazin, N-(2-Hydroxyethyl)piperazin, N-(2-Aminoethyl)piperazin, Homopiperazin, Piperidin und Morpholin.

Besonders bevorzugt sind 5-, 6- oder 7-gliedrige gesättigte Heterocyclen mit wenigstens einer NH-Gruppe im Ring, die ein oder zwei weitere, unter Stickstoff und Sauerstoff ausgewählte Heteroatome im Ring enthalten können. Ganz besonders bevorzugt ist Piperazin.

Carboanhydrasen b2) sind Zink-Metalloenzyme, die in verschiedenen Isoformen in Tieren, Pflanzen, Bakterien und Grünalgen vorkommen. Carboanhydrasen katalysieren die Reaktion von Kohlendioxid und Wasser zu Kohlensäure und umgekehrt. Auch die Hydrolyse der von primären und sekundären Aminen gebildeten Carbamatstruktur zu Amin und Hydrogencarbonat kann von Carboanhydrasen beschleunigt werden, wodurch das Amin schneller wieder für die CO₂-Absorption zur Verfügung steht. Dies ist insbesondere bei sterisch gehinderten primären und sekundären Aminen der Fall, bei denen die Stabilität der Carbamatstruktur vergleichsweise niedrig und die Hydrolyse dementsprechend von vornherein begünstigt ist.

Das molare Verhältnis von b) zu a) liegt bevorzugt im Bereich von 0,05 bis 1,0, besonders bevorzugt im Bereich von 0,05 bis 0,7.

Im Allgemeinen beträgt die Gesamtkonzentration von a) und b) in der wässrigen Lösung 10 bis 60 Gew.-%, bevorzugt 20 bis 50 Gew.-%, besonders bevorzugt 30 bis 50 Gew.-%.

In einer Ausführungsform enthält die wässrige Lösung wenigstens ein organisches Lösungsmittel. Das organische Lösungsmittel ist bevorzugt ausgewählt unter Sulfolan, Glycolen wie Ethylenglycol, Diethylenglycol, Ethylenglycoldimethylether, Triethylenglycol, Triethylenglycoldimethylether, Di- oder Mono-(C₁₋₄-Alkylether)-monoethylengylcolen und Di- oder Mono-(C₁₋₄-Alkylether)-polyethylengylcolen, N-Methylpyrrolidon, N-Methyl-3-morpholin, N-Formylmorpholin, N-Acetylmorphlin, N,N-Dimethylformamid, N,N-Dimethylimidazolidin-2-on, N-Methylimidazol und Gemische davon.

In bestimmten Ausführungsformen enthält das Absorptionsmittel wenigstens eine Säure. Die Säure ist geeigneter Weise unter Protonensäuren (Brönstedt-Säuren) ausgewählt. Die Säure ist ausgewählt unter organischen und anorganischen Säuren. Geeignete organische Säuren umfassen beispielsweise Phosphonsäuren, Sulfonsäuren, Carbonsäuren und Aminosäuren. In bestimmten Ausführungsformen ist die Säure eine mehrbasische Säure.

Unter den anorganischen Säuren sind Phosphorsäure und Schwefelsäure bevorzugt.

Unter den Carbonsäuren sind Ameisensäure, Essigsäure, Benzoesäure, Bernsteinsäure und Adipinsäure bevorzugt.

Unter den Sulfonsäuren sind Methansulfonsäure, p-Toluolsulfonsäure und 2-(4-(2-Hydroxyethyl)-1-piperazinyl)-ethansulfonsäure (HEPES) bevorzugt.

Unter den Phosphonsäuren sind 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) (HDTMP) und Nitrilotris(methylenphosphonsäure) bevorzugt, wovon 1-Hydroxyethan-1,1-diphosphonsäure besonders bevorzugt ist.

In anderen Ausführungsformen ist das Absorptionsmittel frei von Aminocarbonsäuren, Aminosulfonsäuren und Phosphonsäuren.

Das Absorptionsmittel kann auch Additive, wie Korrosionsinhibitoren, etc. enthalten. Im Allgemeinen liegt die Menge an derartigen Additiven im Bereich von etwa 0,01 bis 3 Gew.-% des Absorptionsmittels.

Das erfindungsgemäße Absorptionsmittel bzw. Verfahren ist geeignet zur Behandlung von Fluiden aller Art. Fluide sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie Flüssiggaskraftstoff (LPG, Liquefied Petroleum Gas) oder verflüssigtes Erdgas (NGL, Natural Gas Liquids). In einer Ausführungsform ist der Fluidstrom ein Rauchgasstrom, z. B. aus Verbrennungsanlagen, Produktionsgasen, Synthesegasen oder auch Raumluft. Diese Gase entstehen u. a. bei Kraftwerken, Kraftfahrzeugen, Produktionsstätten, Ammoniakproduktion, Epoxidherstellung, Zementproduktion, Keramikindustrie, Kokereien, Metallverhüttung, Stahlindustrie, Treibmittelexposition und klimatisierten Arbeits- und Wohnbereichen. Weitere CO₂-haltige Fluidströme sind Gärgase aus der Methanogenese von Biomassen, Faulgase aus der aeroben und/oder anaeroben Kompostierung von Biomassen, Verbrennungsgase, tierische Verdauungsgase in der Massentierhaltung und CO₂-haltige Raumluft in der Gebäude- und Fahrzeugklimatechnik.

Der Fluidstrom enthält Kohlendioxid; er kann daneben weitere saure Gase, wie insbesondere H₂S, aber auch COS und Mercaptane enthalten. Außerdem können auch SO₃, SO₂, CS₂ und HCN entfernt werden.

Das erfindungsgemäße Verfahren bzw. Absorptionsmittel ist besonders zur Behandlung von kohlenwasserstoffhaltigen Fluidströmen geeignet. Die enthaltenen Kohlenwasserstoffe sind z. B. aliphatische Kohlenwasserstoffe, wie C₁-C₄-Kohlenwasserstoffe, wie Methan, ungesättigte Kohlenwasserstoffe, wie Ethylen oder Propylen, oder aromatische Kohlenwasserstoffe wie Benzol, Toluol oder Xylol. Insbesondere ist das erfindungsgemäße Verfahren zur Behandlung eines Erdgasstroms geeignet. Das erfindungsgemäße Verfahren bzw. Absorptionsmittel ist besonders zur Entfernung von CO₂ geeignet.

Amine der Formel (I) weisen in erfindungsgemäßen Absorptionsmitteln eine hohe Oxidationsbeständigkeit gegenüber sauerstoffhaltigen Fluidströmen auf. Das erfindungsgemäße Verfahren bzw. Absorptionsmittel ist daher besonders zur Behandlung von sauerstoffhaltigen Fluidströmen geeignet. Insbesondere ist das erfindungsgemäße Verfahren zur Behandlung von Verbrennungsabgasen geeignet.

In bevorzugten Ausführungsformen liegt im Fluidstrom ein Kohlendioxid-Partialdruck im Bereich von 0,01 bis weniger als 3,0 bar, insbesondere 0,03 bis weniger als 3,0 bar vor. Die angegebenen Partialdrücke beziehen sich auf den Fluidstrom beim erstmaligen Kontakt mit dem Absorptionsmittel im Absorptionsschritt.

Im erfindungsgemäßen Verfahren wird der Fluidstrom in einem Absorptionsschritt in einem Absorber in Kontakt mit dem Absorptionsmittel gebracht, wodurch Kohlendioxid zumindest teilweise ausgewaschen wird. Man erhält einen CO₂- abgereicherten Fluidstrom und ein CO₂-beladenes Absorptionsmittel.

Als Absorber fungiert vorzugsweise eine in üblichen Gaswäscheverfahren eingesetzte Waschvorrichtung. Geeignete Waschvorrichtungen sind beispielsweise Füllkörper-, Packungs- und Bodenkolonnen, Membrankontaktoren, Radialstromwäscher, Strahlwäscher, Venturi-Wäscher und Rotations-Sprühwäscher, bevorzugt Packungs-, Füllkörper- und Bodenkolonnen, besonders bevorzugt Boden- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist. In Bodenkolonnen sind Sieb-, Glocken- oder Ventilböden eingebaut, über welche die Flüssigkeit strömt. Füllkörperkolonnen können mit unterschiedlichen Formkörpern gefüllt werden. Wärme- und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Die Temperatur des Absorptionsmittels beträgt im Absorptionsschritt im Allgemeinen etwa 30 bis 100°C, bei Verwendung einer Kolonne beispielsweise 30 bis 70°C am Kopf der Kolonne und 50 bis 100°C am Boden der Kolonne. Der Gesamtdruck beträgt im Absorptionsschritt im Allgemeinen etwa 1 bis 180 bar, bevorzugt etwa 1 bis 100 bar.

Das erfindungsgemäße Verfahren kann einen oder mehrere, z. B. zwei, aufeinander folgende Absorptionsschritte umfassen. Die Absorption kann in mehreren aufeinander folgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d. h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP 0 159 495, EP 0 190 434, EP 0 359 991 und WO 00100271.

Aus dem mit den sauren Gasbestandteilen beladenen Absorptionsmittel können die sauren Gasbestandteile in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt. In der Regel umfasst der Regenerationsschritt wenigstens eine der Maßnahmen Erwärmung, Entspannung und Strippen mit einem inerten Fluid. Bevorzugt liegt der Kohlendioxid-Partialdruck im behandelten Gas bei weniger als 0,05 bar.

Der Regenerationsschritt umfasst bevorzugt eine Erwärmung des mit den sauren Gasbestandteilen beladenen Absorptionsmittels. Die absorbierten Sauergase werden dabei mittels des durch Erhitzens der Lösung gewonnenen Wasserdampfes abgestrippt. Anstelle des Dampfes kann auch ein inertes Fluid, wie Stickstoff, verwendet werden. Der absolute Druck im Desorber liegt normalerweise bei 0,1 bis 3,5 bar, bevorzugt 1,0 bis 2,5 bar. Die Temperatur liegt normalerweise bei 50 °C bis 170 °C, bevorzugt bei 80 °C bis 130 °C, wobei die Temperatur natürlich vom Druck abhängig ist.

Der Regenerationsschritt kann alternativ oder zusätzlich eine Druckentspannung umfassen. Diese beinhaltet mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537, 753 und US 4,553, 984.

Die Freisetzung der sauren Gasbestandteile im Regenerationsschritt kann beispielsweise in einer Entspannungskolonne, z. B. einem senkrecht oder waagerecht eingebauten Flash-Behälter oder einer Gegenstromkolonne mit Einbauten, erfolgen.

Bei der Regenerationskolonne kann es sich ebenfalls um eine Füllkörper-, Packungs- oder Bodenkolonne handeln. Die Regenerationskolonne weist am Sumpf einen Aufheizer auf, z. B. einen Aufkocher, Naturumlaufverdampfer, Zwangsumlaufverdampfer, oder Zwangsumlaufentspannungsverdampfer. Am Kopf weist die Regenerationskolonne einen Auslass für die freigesetzten Sauergase auf. Mitgeführte Absorptionsmitteldämpfe werden in einem Kondensator kondensiert und in die Kolonne zurückgeführt.

Es können mehrere Entspannungskolonnen hintereinander geschaltet werden, in denen bei unterschiedlichen Drücken regeneriert wird. Beispielsweise kann in einer Vorentspannungskolonne bei hohem Druck, der typischerweise etwa 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder mehr Entspannungsstufen ist beschrieben in den Druckschriften US 4,537, 753, US 4,553, 984, EP 0 159 495, EP 0 202 600, EP 0 190 434 und EP 0 121 109.

Wegen der optimalen Abstimmung des Gehalts an den Aminkomponenten weist das erfindungsgemäße Absorptionsmittel eine hohe Beladbarkeit mit sauren Gasen auf, die auch leicht wieder desorbiert werden können. Dadurch können bei dem erfindungsgemäßen Verfahren der Energieverbrauch und der Lösungsmittelumlauf signifikant reduziert werden.

Die Erfindung wird anhand der beigefügten Zeichnungen und der nachfolgenden Beispiele näher veranschaulicht.
Fig. 1 ist eine schematische Darstellung einer zur Durchführung des erfindungsgemäßen Verfahrens geeigneten Anlage.
Fig. 2 ist eine schematische Darstellung einer zur Bestimmung der relativen CO₂-Absorptionsgeschwindigkeiten von Absorptionsmitteln verwendeten Doppelrührzellenanordnung.
Fig. 3 zeigt die Stabilität von MEA, MDEA und TBAEE in wässrigen Absorptionsmitteln in Gegenwart von Sauerstoff.

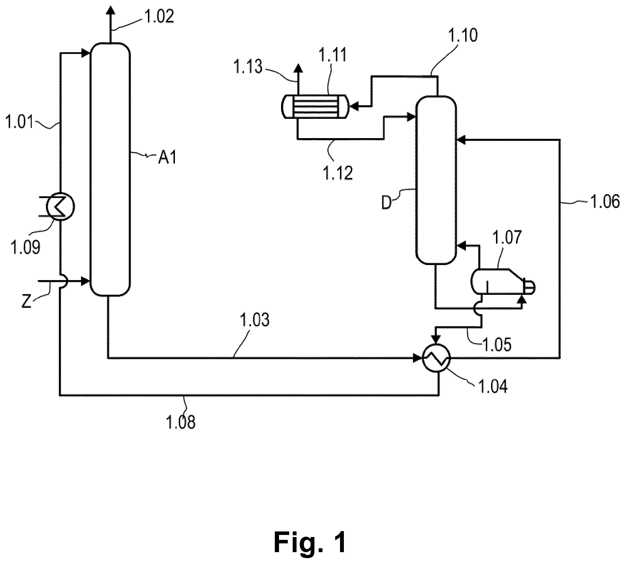

Gemäß Fig. 1 wird über die Zuleitung Z ein geeignet vorbehandeltes, Schwefelwasserstoff und Kohlendioxid enthaltendes Gas in einem Absorber A1 mit regeneriertem Absorptionsmittel, das über die Absorptionsmittelleitung 1.01 zugeführt wird, im Gegenstrom in Kontakt gebracht. Das Absorptionsmittel entfernt Schwefelwasserstoff und Kohlendioxid durch Absorption aus dem Gas; dabei wird über die Abgasleitung 1.02 ein an Schwefelwasserstoff und Kohlendioxid abgereichertes Reingas gewonnen.

Über die Absorptionsmittelleitung 1.03, den Wärmetauscher 1.04, in dem das CO₂- und H₂S-beladene Absorptionsmittel mit der Wärme des über die Absorptionsmittelleitung 1.05 geführten, regenerierten Absorptionsmittels aufgeheizt wird, und die Absorptionsmittelleitung 1.06 wird das mit CO₂- und H₂S-beladene Absorptionsmittel der Desorptionskolonne D zugeleitet und regeneriert. Aus dem unteren Teil der Desorptionskolonne D wird das Absorptionsmittel in den Aufkocher 1.07 geführt, wo es erhitzt wird. Der hauptsächlich wasserhaltige Dampf wird in die Desorptionskolonne D zurückgeführt, während das regenerierte Absorptionsmittel über die Absorptionsmittelleitung 1.05, den Wärmetauscher 1.04, in dem das regenerierte Absorptionsmittel das CO₂- und H₂S-beladene Absorptionsmittel aufheizt und selbst dabei abkühlt, die Absorptionsmittelleitung 1.08, den Kühler 1.09 und die Absorptionsmittelleitung 1.01 dem Absorber A1 wieder zugeführt wird. Anstelle des gezeigten Aufkochers können auch andere Wärmetauschertypen zur Erzeugung des Strippdampfes eingesetzt werden, wie ein Naturumlaufverdampfer, Zwangsumlaufverdampfer, oder Zwangsumlaufentspannungsverdampfer. Bei diesen Verdampfertypen wird ein gemischtphasiger Strom aus regeneriertem Absorptionsmittel und Strippdampf in den Sumpf der Desorptionskolonne zurückgefahren, wo die Phasentrennung zwischen dem Dampf und dem Absorptionsmittel statt. Das regenerierte Absorptionsmittel zum Wärmetauscher 1.04 wird entweder aus dem Umlaufstrom vom Sumpf der Desorptionskolonne zum Verdampfer abgezogen, oder über eine separate Leitung direkt aus dem Sumpf der Desorptionskolonne zum Wärmetauscher 1.04 geführt.

Das in der Desorptionskolonne D freigesetzte CO₂- und H₂S-haltige Gas verlässt die Desorptionskolonne D über die Abgasleitung 1.10. Es wird in einen Kondensator mit integrierter Phasentrennung 1.11 geführt, wo es von mitgeführtem Absorptionsmitteldampf getrennt wird. Anschließend wird eine hauptsächlich aus Wasser bestehende Flüssigkeit über die Absorptionsmittelleitung 1.12 in den oberen Bereich der Desorptionskolonne D geführt, und ein CO₂- und H₂S-haltiges Gas über die Gasleitung 1.13 ausgeführt.

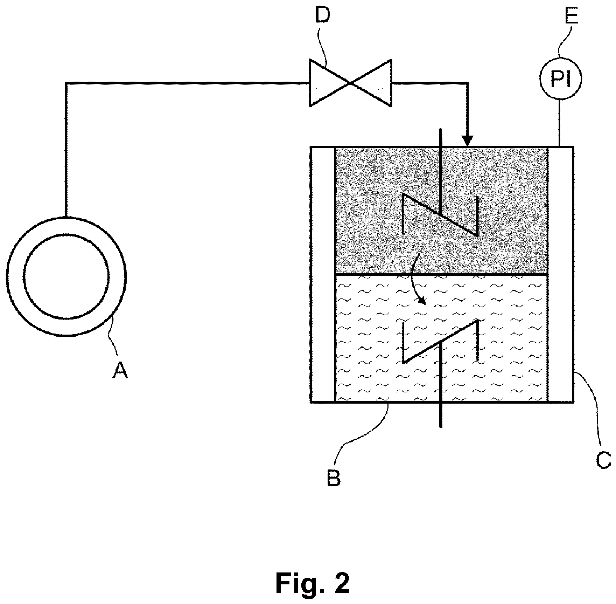

In Fig. 2 werden die folgenden Referenzzeichen verwendet: A = CO₂-Speicherbehälter, B = Doppelrührzelle, C = Temperaturregler, D = Dosierventil, E = Druckmessgerät. Gemäß Fig. 2 befindet sich im unteren Teil der Doppelrührzelle B eine Flüssigphase des zu prüfenden Absorptionsmittels, welche mit der darüber liegenden Gasphase über eine Phasengrenze in Kontakt steht. Die Flüssig- bzw. Gasphase können jeweils mit einem Rührer durchmischt werden. Die Doppelrührzelle B ist über ein Dosierventil D mit dem CO₂-Speicherbehälter A verbunden. Der in der Doppelrührzelle B herrschende Druck kann mittels des Druckmessgeräts E bestimmt werden. Bei der Messung wird der Volumenstrom des Kohlendioxids aufgezeichnet, wobei der Volumenstrom so eingestellt ist, dass ein konstanter Druck in Doppelrührzelle B herrscht.

### Beispiel 1

In einer Doppelrührzelle (DRZ) gemäß Fig. 2 wurden die relativen CO₂-Absorptionsgeschwindigkeiten von wässrigen Absorptionsmitteln gemessen.

Die Doppelrührzelle hatte einen Innendurchmesser von 85 mm und ein Volumen von 509 mL. Die Temperatur der Zelle wurde während den Messungen auf 50 °C gehalten. Um die Gas- und Flüssigphasen zu durchmischen, umfasste die Zelle gemäß Fig. 2 zwei Rührer. Vor Beginn der Messung wurde die Doppelrührzelle evakuiert. Ein definiertes Volumen an entgastem Absorptionsmittel wurde in die Doppelrührzelle gegeben und die Temperatur auf 50 °C reguliert. Die Rührer wurden bereits während des Aufheizens des unbeladenen Absorptionsmittels eingeschaltet. Die Drehzahl der Rührer wurde so gewählt, dass sich eine planare Phasengrenzfläche zwischen der Flüssig- und der Gasphase ausbildete. Eine Wellenentwicklung an der Phasengrenzfläche muss vermieden werden, da sonst keine definierte Phasengrenzfläche bestehen würde. Nachdem die gewünschte experimentelle Temperatur erreicht war, wurde Kohlendioxid mittels eines Dosierventils in den Reaktor eingeführt. Der Volumenstrom wurde so kontrolliert, dass während des gesamten Versuchs ein konstanter Druck von 50 mbar abs herrschte. Mit zunehmender Versuchszeit nahm der Volumenstrom ab, da das Absorptionsmedium über die Zeit gesättigt wurde und die Absorptionsgeschwindigkeit abnahm. Der Volumenstrom wurde über die gesamte Zeit aufgezeichnet. Der Versuch war beendet, sobald kein Kohlendioxid mehr in die Doppelrührzelle floss. Das Absorptionsmedium war am Ende des Versuchs in einem Gleichgewichtszustand. Die angegebene Absorptionsgeschwindigkeit wurde bei einer Beladung von 10 Nm³ (CO₂) / t (Absorptionsmittel) bestimmt.

Es wurden folgende Absorptionsmittel untersucht: (1-1) wässrige Lösung von Methyldiethanolamin (MDEA) (2,2 M) und Piperazin (1,5 M); (1-2) wässrige Lösung von 2-(2-tert-Butylaminoethoxy)ethanol (TBAEE) (2,2 M) und Piperazin (1,5 M); und (1-3) wässrige Lösung von 2-(2-tert-Butylaminoethoxy)ethanol (TBAEE) (2,2 M) und Monoethanolamin (MEA) (1,5 M). Die Ergebnisse sind in der nachstehenden Tabelle angegeben:

| Beispiel | System | Relative Absorptionsgeschwindigkeit** |
|---|---|---|
| 1-1* | MDEA + Piperazin | 100% |
| 1-2 | TBAEE + Piperazin | 311% |
| 1-3 | TBAEE + MEA | 120% |

| | | |
|---|---|---|
| * Vergleichsbeispiel ** bezogen auf Beispiel 1-1* | | |

Es ist erkennbar, dass im erfindungsgemäßen Beispiel 1-2 die Absorptionsgeschwindigkeit deutlich höher ist als in den Beispielen 1-1 und 1-3.

### Beispiel 2

In diesem Beispiel wurde in einer Pilotanlage gemäß Figur 1 die CO₂-Abtrennung aus einem Gasstrom, bestehend aus 91% N₂ und 9% CO₂ untersucht. Im Gasstrom herrschte ein Druck von 1,05 bar bei 40 °C. Der Massenstrom betrug 42 kg/h. Das jeweilige Absorptionsmittel hatte eine Temperatur von 40 °C. Im Absorber (Höhe 4,2 m, Durchmesser 0,1 m, Druck 60 bar) wurden strukturierte Packungen verwendet. Im Desorber (Höhe 2,0 m, Durchmesser 0,085 m, Druck 1,8 bar) wurden ebenfalls strukturierte Packungen verwendet.

Als Absorptionsmittel dienten
(2-1) eine 30 Gew.-%ige wässrige Lösung von Monoethanolamin (MEA);
(2-2) eine wässrige Lösung von Methyldiethanolamin (MDEA) (2,2 M) und Piperazin (1,5 M); und
(2-3) eine wässrige Lösung von 2-(2-tert-Butylaminoethoxy)ethanol (TBAEE) (2,2 M) und Piperazin (1,5 M).

Absorptionsmittel-Umlaufrate und Aufheizenergie wurden so variiert, dass 70% des Kohlendioxids aus dem Rauchgas abgetrennt wurden. Die in der nachstehenden Tabelle genannten Absorptionsmittel-Umlaufraten entsprechen der Absorptionsmittel-Umlaufrate mit dem minimalen Energieverbrauch. Die in folgender Tabelle genannten relativen Werte beziehen sich auf das Referenzsystem 30% MEA.

| Beispiel | System | relative Absorptionsmittel-Umlaufrate** | relative Energie** [%] |
|---|---|---|---|
| 2-1* | MEA | 100% | 100% |
| 2-2* | MDEA + Piperazin | 81% | 95% |
| 2-3 | TBAEE + Piperazin | 63% | 76% |

| | | | |
|---|---|---|---|
| * Vergleichsbeispiel ** bezogen auf Beispiel 2-1* | | | |

Es ist erkennbar, dass in Beispiel 2-3 gegenüber den Vergleichsbeispielen 2-1 und 2-2 der geforderte CO₂-Abtrennungsgrad von 70% mit einer geringeren Absorptionsmittel-Umlaufrate und einem geringerem relativen Energieverbrauch erreicht wird.

### Beispiel 3

In diesem Beispiel wurde die Stabilität wässriger Absorptionsmittel gegenüber sauerstoffhaltigen Fluidströmen untersucht.

Als Absorptionsmittel dienten:
(3-1) wässrige Lösung von Monoethanolamin (MEA, 30 Gew.-%);
(3-2) wässrige Lösung von Methyldiethanolamin (MDEA, 25 Gew.-%) und Piperazin (15 Gew.-%); und
(3-3) wässrige Lösung von 2-(2-tert-Butylaminoethoxy)ethanol (TBAEE, 37 Gew.-%) und Piperazin (13 Gew.-%).

In einem Glasdruckreaktor mit aufgesetztem Rückkühler und Rührer wurde das Absorptionsmittel (ca. 120 g) vorgelegt. Über eine Metallfritte mit einer mittleren Porengröße von 10 µm wurde kontinuierlich ein Gasgemisch aus 8 Vol.-% O₂, 28 Vol.-% CO₂ und 64 Vol.-% N₂, in das Absorptionsmittel geleitet. Der Volumenstrom an Gas betrug 12,5 NL/h. Der Glasreaktor wurde auf 100 °C aufgeheizt und der Druck im Reaktor wurde mittels eines Druckregelventils auf 2 bar eingestellt. Unter diesen Bedingungen wurden die Versuche über 400 bis 500 h gefahren. Das mit dem Gas ausgetragene Wasser wurde mittels des auf den Reaktor aufgesetzten Rückkühlers zurückgeführt, der bei ca. 5 °C betrieben wurde. In regelmäßigen Abständen wurden Proben aus der flüssigen Phase entnommen und mittels GC auf den Amingehalt (TBAEE bzw. MDEA bzw. MEA) untersucht. Die Amingehalte sind als normierten Flächenanteile der GC-Analyse angegeben.

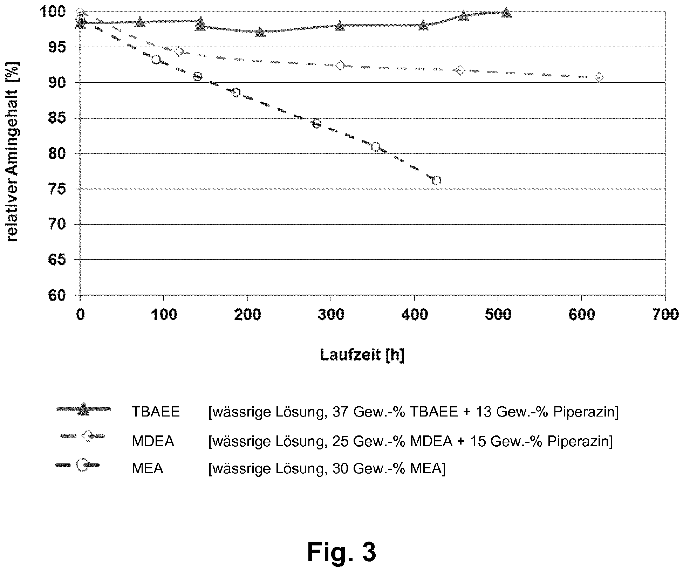

In der Fig. 3 ist der zeitliche Verlauf des Amingehaltes für MEA, MDEA und TBAEE gezeigt. Der normierte Flächenanteil betrug für TBAEE nach ca. 500 Versuchsstunden noch nahezu 100%, es konnte also keine signifikante Zersetzung von TBAEE festgestellt werden. Hingegen wurden von MEA nach ca. 400 Versuchsstunden nur noch ca. 75% der eingesetzten Menge wiedergefunden; von MDEA wurden nur noch ca. 90% der eingesetzten Menge wiedergefunden.

## Patentansprüche

1. Absorptionsmittel zur Entfernung von Kohlendioxid aus einem Fluidstrom, umfassend eine wässrige Lösung, umfassend:
a) ein Amin der allgemeinen Formel (I) 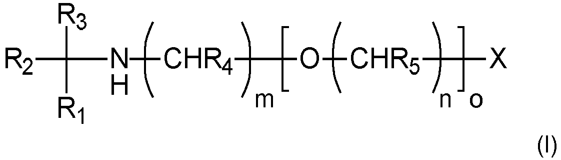 worin R₁, R₂ und R₃ unabhängig voneinander ausgewählt sind unter C₁₋₄-Alkyl und C₁₋₄-Hydroxyalkyl; R₄ jeweils unabhängig ausgewählt ist unter Wasserstoff, C₁₋₄-Alkyl und C₁₋₄-Hydroxyalkyl; R₅ jeweils unabhängig ausgewählt ist unter Wasserstoff, C₁₋₄-Alkyl und C₁₋₄-Hydroxyalkyl; X für OH oder NH(CR₁R₂R₃) steht; m für 2, 3, 4 oder 5 steht; n für 2, 3, 4 oder 5 steht; und o für 0 oder 1 steht;
und
b) wenigstens einen Aktivator, ausgewählt unter 5-, 6- oder 7-gliedrigen gesättigten Heterocyclen mit wenigstens einer NH-Gruppe im Ring, welche ein oder zwei weitere, unter Stickstoff und Sauerstoff ausgewählte Heteroatome im Ring enthalten können.

2. Absorptionsmittel nach Anspruch 1, wobei das molare Verhältnis von b) zu a) im Bereich von 0,05 bis 1,0 liegt.

3. Absorptionsmittel nach Anspruch 1 oder 2, wobei die Gesamtmenge von a) und b) in der wässrigen Lösung 10 bis 60 Gew.-% beträgt.

4. Absorptionsmittel nach einem der vorherigen Ansprüche, wobei das Amin a) ausgewählt ist unter 2-(2-tert-Butylaminoethoxy)ethanol, 3-(tert-Butylamino)-propanol, 4-(tert-Butylamino)butanol, 2-(2-tert-Amylaminoethoxy)ethanol, 2-(2-(1-Methyl-1-ethylpropylamino)ethoxy)ethanol, 2-(tert-Butylamino)ethanol und (2-(tert-Butylamino)ethyl)methylamin.

5. Absorptionsmittel nach einem der vorhergehenden Ansprüche, wobei der gesättigte Heterocyclus ausgewählt ist unter Piperazin, 2-Methylpiperazin, N-Methylpiperazin, N-Ethylpiperazin, N-(2-Hydroxyethyl)piperazin, N-(2-Aminoethyl)piperazin, Homopiperazin, Piperidin und Morpholin.

6. Absorptionsmittel nach einem der vorhergehenden Ansprüche, wobei die wässrige Lösung wenigstens ein organisches Lösungsmittel umfasst.

7. Absorptionsmittel nach einem der vorhergehenden Ansprüche, wobei die wässrige Lösung wenigstens eine Säure umfasst.

8. Verfahren zur Entfernung von Kohlendioxid aus einem Fluidstrom, bei dem man den Fluidstrom mit einem Absorptionsmittel nach einem der vorhergehenden Ansprüche in Kontakt bringt.

9. Verfahren nach Anspruch 8, wobei der Fluidstrom unter Gasen ausgewählt ist und im Fluidstrom ein Kohlendioxid-Partialdruck im Bereich von 0,01 bis weniger als 3,0 bar vorliegt.

10. Verfahren nach Anspruch 8 oder 9, wobei der Fluidstrom unter Gasen ausgewählt ist und im behandelten Fluidstrom ein Kohlendioxid-Partialdruck von weniger als 0,05 bar vorliegt.

11. Verfahren nach Anspruch 8 bis 10, wobei der Fluidstrom ein kohlenwasserstoffhaltiger Fluidstrom ist.

12. Verfahren nach Anspruch 8 bis 10, wobei der Fluidstrom ein sauerstoffhaltiger Fluidstrom ist.

13. Verfahren nach einem der Ansprüche 8 bis 12, wobei man das beladene Absorptionsmittel durch
i. Erwärmung,
ii. Entspannung,
iii. Strippen mit einem inerten Fluid
oder eine Kombination zweier oder aller dieser Maßnahmen regeneriert.

## Claims

1. An absorbent for removing carbon dioxide from a fluid stream, comprising an aqueous solution comprising:
a) an amine of the general formula (I) 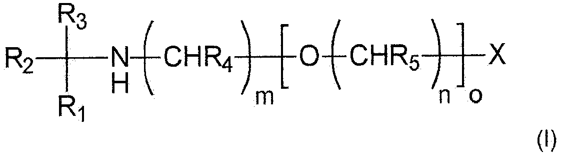 wherein R₁, R₂ and R₃ are selected independently of one another from C₁₋₄-alkyl and C₁₋₄-hydroxyalkyl; each R₄ is selected independently from hydrogen, C₁₋₄-alkyl and C₁₋₄-hydroxyalkyl; each R₅ is selected independently from hydrogen, C₁₋₄-alkyl and C₁₋₄-hydroxyalkyl; X represents OH or NH(CR₁R₂R₃); m represents 2, 3, 4 or 5; n represents 2, 3, 4 or 5; and o represents 0 or 1;
and
b) at least one activator selected from 5-, 6- or 7-membered saturated heterocycles having at least one NH group in the ring, which heterocycles can contain in the ring one or two further heteroatoms selected from nitrogen and oxygen.

2. The absorbent according to claim 1, wherein the molar ratio of b) to a) is in the range from 0.05 to 1.0.

3. The absorbent according to claim 1 or 2, wherein the total amount of a) and b) in the aqueous solution is from 10 to 60% by weight.

4. The absorbent according to one of the preceding claims, wherein the amine a) is selected from 2-(2-tert-butylaminoethoxy)ethanol, 3-(tert-butyl-amino)propanol, 4-(tert-butylamino)butanol, 2-(2-tert-amylaminoethoxy)ethanol, 2-(2-(1-methyl-1-ethylpropylamino)ethoxy)ethanol, 2-(tert-butyl-amino)ethanol and (2-(tert-butylamino)ethyl)-methylamine.

5. The absorbent according to one of the preceding claims, wherein the saturated heterocycle is selected from piperazine, 2-methylpiperazine, N-methylpiperazine, N-ethylpiperazine, N-(2-hydroxyethyl)piperazine, N-(2-aminoethyl)piperazine, homopiperazine, piperidine and morpholine.

6. The absorbent according to one of the preceding claims, wherein the aqueous solution comprises at least one organic solvent.

7. The absorbent according to one of the preceding claims, wherein the aqueous solution comprises at least one acid.

8. A method for removing carbon dioxide from a fluid stream, in which the fluid stream is brought into contact with an absorbent according to one of the preceding claims.

9. The method according to claim 8, wherein the fluid stream is selected from gases, and a carbon dioxide partial pressure in the range of from 0.01 to less than 3.0 bar is present in the fluid stream.

10. The method according to claim 8 or 9, wherein the fluid stream is selected from gases, and a carbon dioxide partial pressure of less than 0.05 bar is present in the treated fluid stream.

11. The method according to claim 8 to 10, wherein the fluid stream is a hydrocarbon-containing fluid stream.

12. The method according to claim 8 to 10, wherein the fluid stream is an oxygen-containing fluid stream.

13. The method according to one of claims 8 to 12, wherein the loaded absorbent is regenerated by
i. heating,
ii. depressurization,
iii. stripping with an inert fluid
or a combination of two or all of these measures.

## Revendications

1. Agent d'absorption pour l'élimination de dioxyde de carbone d'un courant fluide, comprenant une solution aqueuse, comprenant :
a) une amine de formule générale (I) 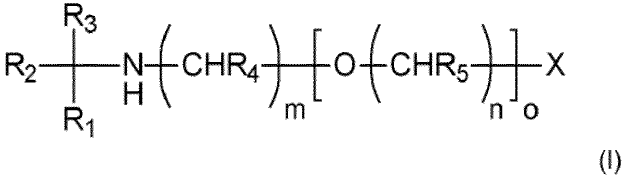 dans laquelle R₁, R₂ et R₃ sont choisis indépendamment les uns des autres parmi alkyle en C₁₋₄ et hydroxyalkyle en C₁₋₄ ; les R₄ sont chacun choisis indépendamment parmi hydrogène, alkyle en C₁₋₄ et hydroxyalkyle en C₁₋₄ ; les R₅ sont chacun choisis indépendamment parmi hydrogène, alkyle en C₁₋₄ et hydroxyalkyle en C₁₋₄ ; X représente OH ou NH(CR₁R₂R₃) ; m représente 2, 3, 4 ou 5 ; n représente 2, 3, 4 ou 5 ; et o représente 0 ou 1 ;
et
b) au moins un activateur, choisi parmi les hétérocycles saturés à 5, 6 ou 7 chaînons contenant au moins un groupe NH dans le cycle, qui peuvent contenir un ou deux autres hétéroatomes choisis parmi l'azote et l'oxygène dans le cycle.

2. Agent d'absorption selon la revendication 1, dans lequel le rapport molaire entre b) et a) se situe dans la plage allant de 0,05 à 1,0.

3. Agent d'absorption selon la revendication 1 ou 2, dans lequel la quantité totale de a) et b) dans la solution aqueuse est de 10 à 60 % en poids.

4. Agent d'absorption selon l'une quelconque des revendications précédentes, dans lequel l'amine a) est choisie parmi le 2-(2-tert-butylaminoéthoxy)éthanol, le 3-(tert-butylamino)-propanol, le 4-(tert-butylamino)butanol, le 2-(2-tert-amylaminoéthoxy)éthanol, le 2-(2-(1-méthyl-1-éthylpropylamino)éthoxy)éthanol, le 2-(tert-butylamino)éthanol et la (2-(tert-butylamino)éthyl)méthylamine.

5. Agent d'absorption selon l'une quelconque des revendications précédentes, dans lequel l'hétérocycle est choisi parmi la pipérazine, la 2-méthylpipérazine, la N-méthylpipérazine, la N-éthylpipérazine, la N-(2-hydroxyéthyl)pipérazine, la N-(2-aminoéthyl)pipérazine, l'homopipérazine, la pipéridine et la morpholine.

6. Agent d'absorption selon l'une quelconque des revendications précédentes, dans lequel la solution aqueuse comprend au moins un solvant organique.

7. Agent d'absorption selon l'une quelconque des revendications précédentes, dans lequel la solution aqueuse comprend au moins un acide.

8. Procédé d'élimination de dioxyde de carbone d'un courant fluide, selon lequel le courant fluide est mis en contact avec un agent d'absorption selon l'une quelconque des revendications précédentes.

9. Procédé selon la revendication 8, dans lequel le courant fluide est choisi parmi les gaz et une pression partielle de dioxyde de carbone dans la plage allant de 0,01 à moins de 3,0 bar est présente dans le courant fluide.

10. Procédé selon la revendication 8 ou 9, dans lequel le courant fluide est choisi parmi les gaz et une pression partielle de dioxyde de carbone inférieure à 0,05 bar est présente dans le courant fluide traité.

11. Procédé selon les revendications 8 à 10, dans lequel le courant fluide est un courant fluide contenant des hydrocarbures.

12. Procédé selon les revendications 8 à 10, dans lequel le courant fluide est un courant fluide contenant de l'oxygène.

13. Procédé selon les revendications 8 à 12, dans lequel l'agent d'absorption chargé est régénéré par
i. chauffage,
ii. détente,
iii. extraction avec un fluide inerte
ou une combinaison de deux de ou de toutes ces mesures.
